# EUROPÄISCHE PATENTSCHRIFT

(11) **EP 0 848 115 B1**
(45) Veröffentlichungstag und Bekanntmachung des Hinweises auf die Patenterteilung: **12.12.2001**
(21) Anmeldenummer: 97117235.8
(22) Anmeldetag: 06.10.1997
(51) Int. Cl.: A47J 36/00

(54) **Gargerät mit einer Sicherungsvorrichtung für die Wasserversorgung**
Cooking appliance with a security device for the water supply
Appareil de cuisine avec un dispositif de sécurité pour le réseau d'alimentation

(30) Priorität: 10.12.1996 DE 19651283
(43) Veröffentlichungstag der Anmeldung: 17.06.1998
(73) Patentinhaber: Rational AG, 86899 Landsberg a. Lech (DE)
(72) Erfinder: Pattermann, Simon, D-82205 Gilching (DE); Deuringer, Martin, D-86894 Weil (DE)
(74) Vertreter: Goddar, Heinz J., Dr.

(56) Entgegenhaltungen:
- WO-A-95/25203
- DE-U- 9 307 738
- DE-U- 29 518 147

## Beschreibung

Die Erfindung betrifft ein Gargerät mit Sicherungsvorrichtung für die Wasserversorgung.

Um Trinkwasser vor Verunreinigungen, nämlich Trinkwasser-Installationen gegenüber Verschmutzungen und Kontaminationen durch Abwasser, zu schützen, werden Geräte, die, beispielsweise, an dem Wassersystem eines Hauses angeschlossen sind, im allgemeinen dadurch geschützt, daß die Frisch-Wasserzuläufe und Abwasser-Abläufe durch geeignete Maßnahmen voneinander getrennt werden. Diese Trennung muß insbesondere bei Funktionsstörungen, d.h. bei Blokierung des Abwasser-Netzes, funktionssicher sein. Zu diesem Zweck muß gewährleistet sein, daß sich rückstauendes Wasser in keinem Fall Trinkwasserzuleitungen verschmutzen kann. Dies wird häufig durch einen freien Ablauf erreicht.

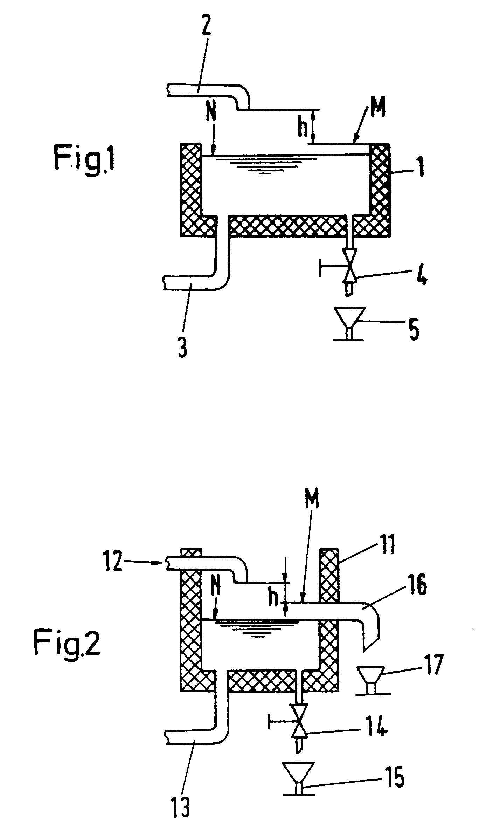

In Fig. 1 ist ein Verwirklichung eines freien Auslaufs gemäß dem Stand der Technik dargestellt, bei der oberhalb eines Abwasserauffangbehälters 1 eine Zulaufleitung 2 mit einer freien Luftstrecke h zwischen der Unterkante der Zulauföffnung und dem maximalen Wasserspiegel M und an der Unterkante des Abwasserauffangbehälters 1 einerseits eine Ablaufleitung 3 und andererseits ein Ventil 4 oberhalb eines Entwässerungsgegenstandes 5 angeschlossen ist. Im Normalbetrieb liegt der Wasserstand N unterhalb des maximalen Wasserspiegels M, während im Fall der Verstopfung der Ablaufleitung 3 Abwasser aus dem Abwasserauffangbehälter 1 überlaufen kann, so daß durch die freie Luftstrecke h ein Rückstau ausgeschlossen ist.

Fig. 2 zeigt eine bekannten Anordnung eines freien Auslaufs mit Überlauf, umfassend einen Abwasserauffangbehälter 11, eine Zulaufleitung 12, eine Ablaufleitung 13, ein Ventil 14, ein Entwässerungsgegenstand 15, eine Überlaufleitung 16 und ein Entwässerungsgegenstand 17. Dabei ist die Unterkante der Zulaufleitung 2 mit einer vertikalen Luftstrecke h oberhalb des maximalen Wasserspiegels M, der sich bei Blockierung der Ablaufleitung 13 an der Oberkante der Überlaufleitung 12 einstellt, angeordnet. Sobald das Wasser einen Wasserspiegel N in der Höhe der Unterkante der Überlaufleitung 16 erreicht, kann es somit, ohne einen Rückstau zu verursachen, über die Überlaufleitung 16 abfliessen.

Anstatt einer freien Fließstrecke h kann ein freier Ablauf auch mittels einer Belüftungseinrichtung, die sich im Fall einer Unterbrechung des Durchflusses und/oder eines Unterdrucks in dem Abwassersystem öffnet, versehen sein, was jedoch den Aufbau komplizierter und störungsanfälliger werden läßt.

Aus der DE-U-9307738 ist eine Hebergullyanordnung in einem Leitungssystem bekannt, mit einem im Boden versenkbaren, unten verschlossenen Behälter und einem Heberrohr, dessen beide Heberrohrarme mindestens teilweise innerhalb des Behälters angeordnet sind, wobei zur Reinigung des Sumpfes am Boden das saugseitige Rohr des Hebers werkzeugfrei aus dem Behälter heraushebbar ausgebildet ist.

Aus dem Stand der Technik allgemein bekannte WC-Syphon-Systeme umfassen ein Syphonüberlaufsystem, das eine Wasservorlage enthält, die durch vorhandenes Abwasser aufgefüllt ist. Das Syphonsystem ist dabei so mit der Ablaufleitung verbunden, daß sich Wasser der Wasservorlage oberhalb eines bestimmten Wasserspiegels in einer Sicherungsvorrichtung über die Ablaufleitung entleert, solange diese nicht blockiert ist.

Bei kommerziell erhältlichen Gargeräten die mit Ablösch-Systemen Wrasen aus einem Garraum herausziehen und/oder mit Dampf operieren, führt ein freier Auslauf nachteiligerweise zu einem erheblichen Dampfaustritt über die Trenn-Strecke bzw. Öffnungen innerhalb des Abwasser-Netzes.

Versuche sind daher unternommen worden, besagten Dampfaustritt, beispielsweise, aus Systemen mit einem freien Auslauf mit Überlauf dadurch zu verhindern, daß zumindest eine mechanisch ausgeführte Klappe vor der Austrittsöffnung angebracht ist. Solch eine Klappe hat jedoch den Nachteil, daß sie erstens nicht komplett dampfdicht ist und zweitens mechanisch klemmen oder anderweitig blockiert werden kann.

Nach zukünftiger europaweiten Gesetzgebung wird daher eine mechanische Klappe gänzlich ausgeschlossen.

Der Erfindung liegt daher die Aufgabe zugrunde, ein Gargerät derart weiterzuentwickeln, daß die Nachteile des Stands der Technik überwunden werden, d.h. insbesondere ein Dampfverschluß für das Überlaufsystem vorhanden ist.

Diese Aufgabe wird gemäß der Erfindung gelöst durch ein Gargerät mit einer Sicherungsvorrichtung, angeschlossen in einem Abwassersystem des Gargeräts, wobei das Abwassersystem einen Wasserauffangbehälter mit einer Zulaufleitung und einer Ablaufleitung umfaßt, und die Sicherungsvorrichtung einen dampfdichten Verschluß mittels einer Wasservorlage bereitstellt.

Dabei ist erfindungsgemäß bevorzugt, daß das Abwassersystem eine Überlaufleitung, über die nur bei Blockierung der Ablaufleitung Wasser abfließt, umfaßt, und
die Überlaufleitung über die Wasservorlage dampfdicht gegen den Wasserauffangbehälter verschlossen ist.

Die Wasservorlage kann durch vorhandenes Abwasser oder durch eine separate Wasserzulaufeinrichtung aufgefüllt sein.

Gemäß der Erfindung ist ferner vorgesehen, daß die Sicherungsvorrichtung so mit der Ablaufleitung verbunden ist, daß sich Wasser der Wasservorlage oberhalb eines bestimmten Wasserspiegels in der Sicherungsvorrichtung über die Ablaufleitung, solange diese nicht blokiert ist, entleert.

Ein Syphon bzw. ein Syphonüberlaufsystem, enthaltend die Wasservorlage, kann erfindungsgemäß vorgesehen sein.

Eine Ausführungsform der Erfindung ist dadurch gekennzeichnet, daß das Syphonüberlaufsystem die Überlaufleitung, deren Oberkante in den Wasserauffangbehälter hineinragt und die Oberkante der Ablaufleitung überragt, im Wasserauffangbehälter umgibt, eine Wasseröffnung unterhalb der Oberkante der Überlaufleitung und oberhalb der Oberkante der Ablaufleitung so umfaßt, daß Wasser bei blockierter Ablaufleitung innerhalb des Syphonüberlaufsystems bis zur Oberkante der Überlaufleitung ansteigen und dann über dieselbe ablaufen kann.

Dabei wird vorgeschlagen, daß das Syphonüberlaufsystem eine Schulter, die die Höhe der Wasseröffnung festlegt und somit dem Zurückhalten der Wasservorlage im Syphonüberlaufsystem dient, und eine Trennwand, die sich zwischen der Schulter und der Überlaufleitung zum Ermöglichen des Aufsteigens von Wasser innerhalb des Syphonüberlauf-systems erstreckt, umfaßt.

Ferner kann die Wasseröffnung des Syphonüberlaufsystems zwischen der Schulter und der Trennwand, deren Unterkante unterhalb der Oberkante der Schulter angeordnet ist.

Eine weitere Ausführungsform der Erfindung ist dadurch gekennzeichnet, daß das Syphonüberlaufsystem zwei miteinander verbundene Schenkel umfaßt, wobei der eine Schenkel die Überlaufkante der Überlaufleitung bildet, wobei die Überlaufkante den maximalen Wasserspiegel im Wasserauffangbehälter bei blockierter Ablaufleitung bestimmt, und sich der andere Schenkel in den Wasserauffangbehälter hineinerstreckt, die Unterkante des Wasserauffangbehälters, jedoch nicht die Oberkante der Überlaufleitung überragend.

Auch kann der Wasserauffangbehälter in Form eines Kondensators zwischen einem Garraum und der Sicherungsvorrichtung angeschlossen sein.

Schließlich ist auch vorgeschlagen, daß die Wasservorlage automatisch durch Wasser aus Ablösch-Düsen auffüllbar ist.

Der Erfindung liegt somit die überraschende Erkenntnis zugrunde, daß eine Wasservorlage derart in dem Abwassersystem eines Gargerätes bereitgestellt sein kann, daß ein Dampfverschluß vorliegt.

Weitere Merkmale und Vorteile der Erfindung ergeben sich aus der nachstehenden Beschreibung, in der Ausführungsbeispiele der Erfindung anhand schematischer Zeichnungen im einzelnen erläutert sind. Dabei zeigt:
- Fig. 1: eine Darstellung eines freien Auslaufs gemäß dem Stand der Technik;
- Fig. 2: eine Darstellung eines freien Auslaufs mit Überlauf gemäß dem Stand der Technik;
- Fig. 3: eine Vorderansicht eines Teils eines Gargeräts mit einem Syphonüberlaufsystem gemäß einer Ausführungsform der Erfindung;
- Fig. 4: eine Draufsicht auf den in Fig. 3 gezeigte Gargeräteteil;
- Fig. 5: eine isometrische Darstellung des Syphonüberlaufsystems von Fig. 3 und 4;
- Fig. 6: eine Vorderansicht eines Teils eines Gargeräts mit einem Syphonüberlaufsystem gemäß einer weiteren Ausführungsform der Erfindung;
- Fig. 7: eine Draufsicht auf den in Fig. 6 gezeigten Gargeräteteil;
- Fig. 8: eine isometrische Darstellung des Syphonüberlaufsystems von Fig. 6 und 7.

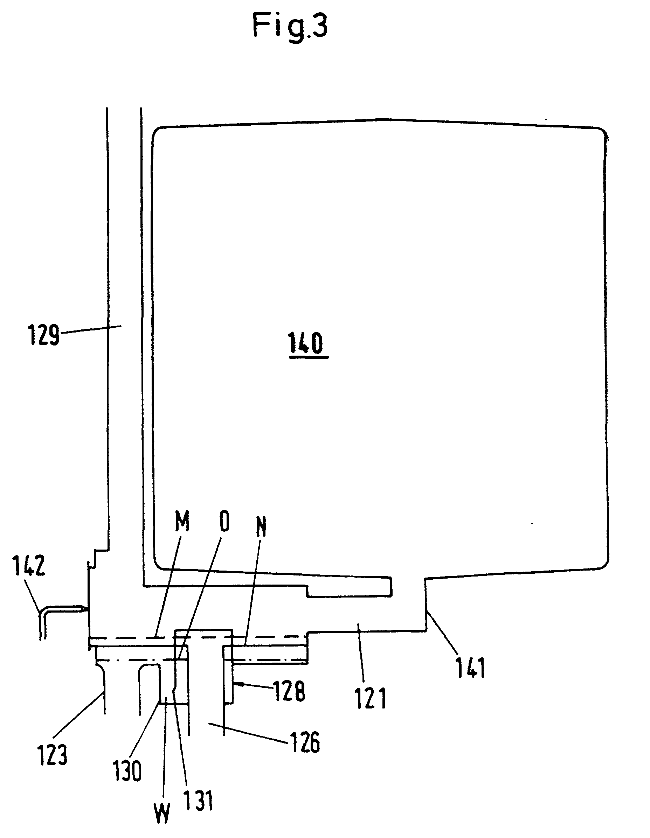

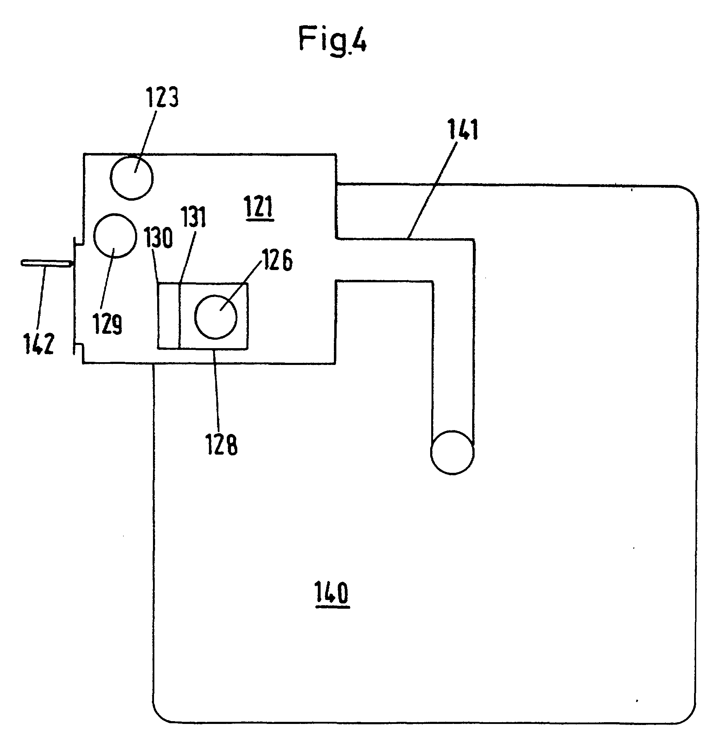

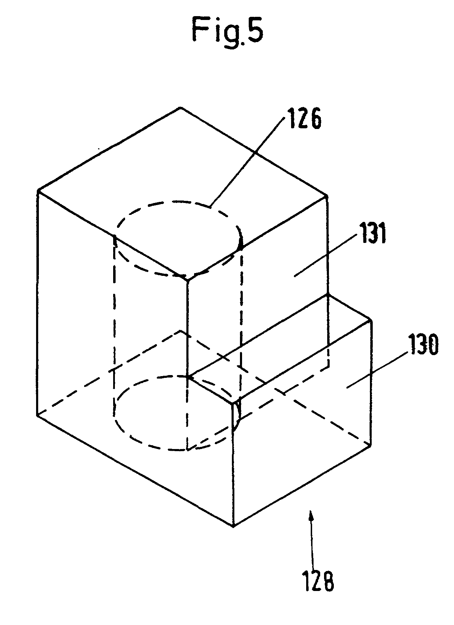

Fig. 3, 4 und 5 zeigen einen Teil eines Gargerät mit einem Syphonüberlaufsystem gemäß einer Ausführungsform der Erfindung. Dabei umfaßt das Gargerät einen Garraum 140, der über eine Garraumablaufleitung 141 mit einem Kondensator 121 verbunden. An dem Kondensator 121 ist eine Ablaufleitung 123, eine Überlaufleitung 126, die innerhalb des Kondensators 121 von einem Syphonüberlaufsystem 128 umgeben ist, ein Entlüftungsrohr 129 und eine Kondensationsdüse 142 angeschlossen.

Das Syphonüberlaufsystem 128 wird automatisch über Wasser aus nicht gezeigten Ablösch-Düsen gefüllt, um eine Wasservorlage W zum dampfdichten Verschliessen der Überlaufleitung 126 gegenüber dem Kondensator 121.

Im Normalbetrieb, d.h. ohne Blockierung der Ablaufleitung 123, wird das Wasser über die Ablaufleitung 123 bei einem Wasserstand O abfliessen. Die Wasservorlage W in dem Syphonüberlaufsystem 128 schließt dabei die Überlaufleitung 126 dampfdicht gegen den Kondensator 121 ab und entleert sich über die Ablaufleitung 123 und nicht über die Überlaufleitung 126 auf ihr durch die Geometrie des Syphonüberlaufsystems 128 vorgegebenes Minimum. Dabei ist das Syphonüberlaufsystem 128 so dimensioniert, daß sich die Wasservorlage W selbst bei kurzzeitigen Druckstöße, wie sie beim Öffnen und Schließen des Gargeräts auftreten können, nicht über die Überlaufleitung 126 entleert.

Das Syphonüberlaufsystem 128 umfaßt, benachbart zu der Ablaufleitung 123, eine Schulter 130 zum Zurückhalten der Wasservorlage W in dem Syphonüberlaufsystem 128, und eine Trennwand 131 zwischen der Schulter 130 und der Überlaufleitung 126, so daß Wasser zwischen der Schulter 130 und der Trennwand 131 in dem Syphonüberlaufsystem 128 im Störfall aufsteigen kann, um bei einem Wasserstand N über die Überlaufleitung 126 abfliessen zu können. Dabei ist der maximale Wasserspiegel M, im Falle der Verstopfung der Ablaufleitung 123, bezüglich des Wasserstandes N um den sogenannten Überlauf-Wasserspiegel erhöht. Die Höhe des Überlauf-Wasserspiegels wird grundsätzlich von der Menge des zuströmenden Wassers bestimmt.

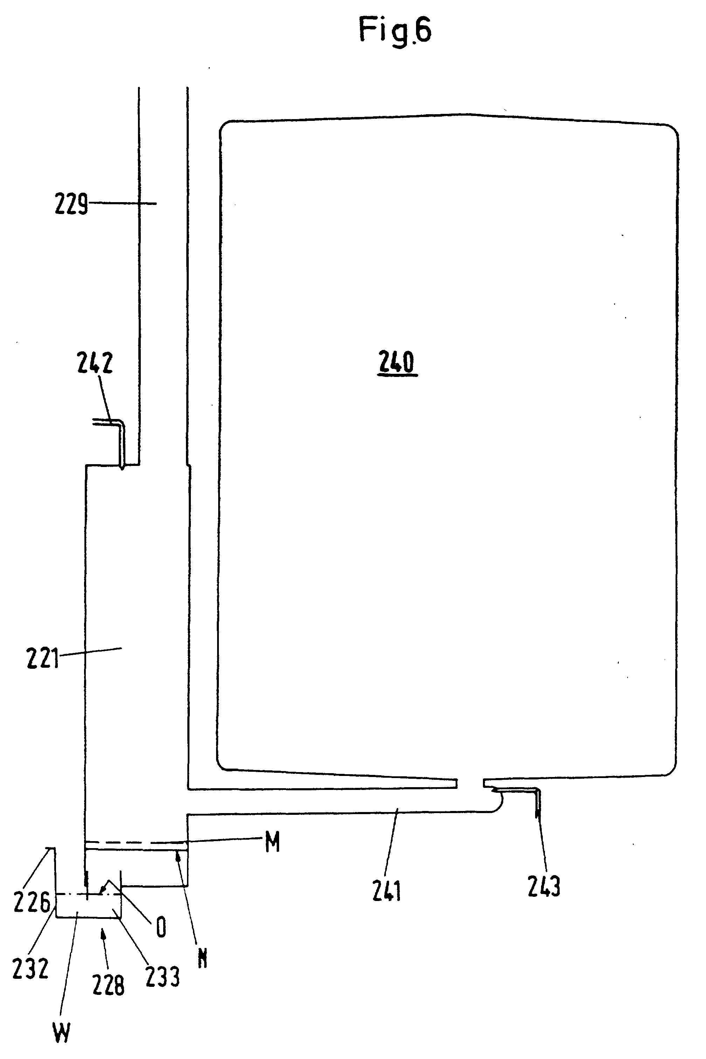

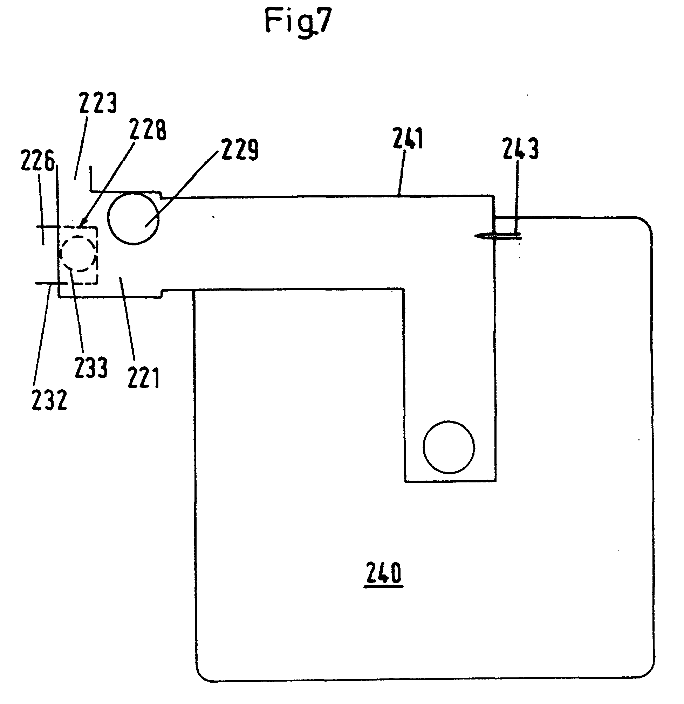

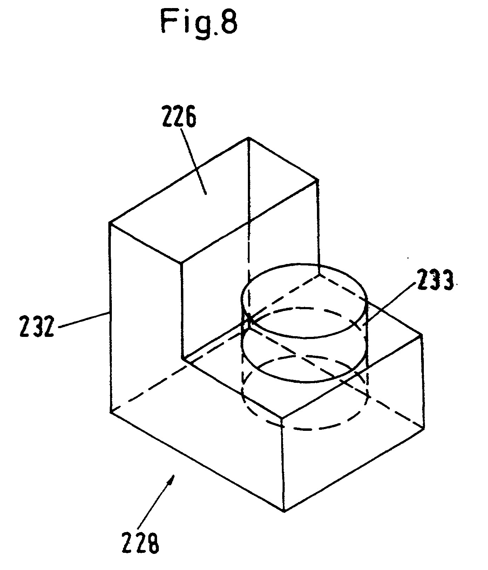

Ein weiteres, im Prinzip wie die gerade beschriebene Ausführungsform arbeitendes Beispiel für ein erfindungsgemäßes Syphonüberlaufsystem in einem Gargerät ist in Fig. 6, 7 und 8 dargestellt. Dabei ist wiederum ein Garraum 240 über eine Garraumablaufleitung 241 mit einem Kondensator 221 verbunden, der seinerseits mit einer Geräteablaufleitung 223, dem Syphonüberlaufsystem 228, dem Entlüftungsrohr 229, einer Kondensationsdüse 242 und einer Entfeuchtungsdüse 243 verbunden ist.

Das Syphonüberlaufsystem 228 besteht aus einem Wasserbehälter mit zwei Schenkeln 232, 233 für zwei miteinander in Verbindung stehende Wassersäulen. Der eine Schenkel 232 ist dabei mit einem Überlaufrohr 226 verbunden, während der zweite Schenkel 233 in den Kondensator 221 hineinragt.
Bereits bei einer Wasservorlage W innerhalb der beiden Schenkeln 232, 233 mit einem Wasserspiegel O ist ein dampfdichtes Verschliessen der Überlaufleitung 226 gegen den Kondensator 212 gewährleistet. Ab einem Wasserstand N, der durch die Unterkante der Auslaßöffnung im Schenkel 232 bestimmt wird, kann Wasser über die Überlaufleitung 226 abfließen, und der maximale Wasserspiegel M, im Störfall, innerhalb des Kondensators 221 wird durch die Überlaufkante der Auslaßöffnung des ersten Schenkels 232 bestimmt.

### Bezugszeichenliste

- 1: Wasserauffangbehälter
- 2: Zulaufleitung
- 3: Ablaufleitung
- 4: Ventil
- 5: Entwässerungsgegenstand
- 11: Wasserauffangbehälter
- 12: Zulaufleitung
- 13: Ablaufleitung
- 14: Ventil
- 15: Entwässerungsgegenstand
- 16: Überlaufleitung
- 17: Entwässerungsgegenstand
- 121: Kondensator
- 123: Geräteablaufleitung
- 126: Überlaufleitung
- 128: Syphonüberlaufsystem
- 129: Entlüftungsrohr
- 130: Schulter
- 131: Trennwand
- 140: Garraum
- 141: Garraumablaufleitung
- 142: Kondensationsdüse
- 221: Kondensator
- 223: Geräteablaufleitung
- 226: Überlaufleitung
- 228: Syphonüberlaufsystem
- 229: Entlüftungsleitung
- 232: erster Schenkel
- 233: zweiter Schenkel
- 240: Garraum
- 241: Garraumablaufleitung
- 242: Kondensationsdüse
- 243: Entfeuchtungsdüse
- h: freie Luftstrecke
- W: Wasservorlage
- M: Wasserspiegel
- N: Wasserspiegel
- O: Wasserspiegel

## Patentansprüche

1. Gargerät mit einer Sicherungsvorrichtung, angeschlossen in einem Abwassersystem des Gargerätes, wobei das Abwassersystem einen Wasserauffangbehälter mit einer Zulaufleitung und einer Ablaufleitung umfaßt, und die Sicherungsvorrichtung (128, 228) einen dampfdichten Verschluß mittels einer Wasservorlage (W) bereitstellt.

2. Gargerät nach Anspruch 1, **dadurch gekennzeichnet, daß**
das Abwassersystem eine Überlaufleitung (126, 226), über die nur bei Blockierung der Ablaufleitung (123, 223) Wasser abfließt, umfaßt, und die Überlaufleitung (126, 226) über die Wasservorlage (W) dampfdicht gegen den Wasserauffangbehälter (121, 221) verschlossen ist.

3. Gargerät nach Anspruch 1 oder 2, **dadurch gekennzeichnet, daß**
die Wasservorlage (W) durch vorhandenes Abwasser aufgefüllt ist.

4. Gargerät nach Anspruch 1 oder 2, **dadurch gekennzeichnet, daß**
die Wasservorlage (W) durch eine separate Wasserzulaufeinrichtung aufgefüllt ist.

5. Gargerät nach einem der vorangehenden Ansprüche, **dadurch gekennzeichnet, daß**
die Sicherungsvorrichtung (128, 228) so mit der Ablaufleitung (126, 226) verbunden ist, daß sich Wasser der Wasservorlage (W) oberhalb eines bestimmten Wasserspiegels in der Sicherungsvorrichtung (128, 228) über die Ablaufleitung (123, 223), solange diese nicht blokiert ist, entleert.

6. Gargerät nach einem der vorangehenden Ansprüche, **gekennzeichnet durch**
ein Syphon zum Aufnehmen der Wasservorlage.

7. Gargerät nach einem der Ansprüche 2 bis 5, **gekennzeichnet durch**
ein Syphonüberlaufsystem (128, 228), enthaltend die Wasservorlage (W).

8. Gargerät nach Anspruch 7, **dadurch gekennzeichnet, daß**
das Syphonüberlaufsystem (128) die Überlaufleitung (126), deren Oberkante in den Wasserauffangbehälter (121) hineinragt und die Oberkante der Ablaufleitung (123) überragt, im Wasserauffangbehälter (121) umgibt, eine Wasseröffnung unterhalb der Oberkante der Überlaufleitung (126) und oberhalb der Oberkante der Ablaufleitung (123) so umfaßt, daß Wasser bei blockierter Ablaufleitung (123) innerhalb des Syphonüberlaufsystems (128) bis zur Oberkante der Überlaufleitung (126) ansteigen und dann über dieselbe ablaufen kann.

9. Gargerät nach Anspruch 8, **dadurch gekennzeichnet, daß**
das Syphonüberlaufsystem (128) eine Schulter (130), die die Höhe der Wasseröffnung festlegt und somit dem Zurückhalten der Wasservorlage (W) im Syphonüberlaufsystem (128) dient, und eine Trennwand (131), die sich zwischen der Schulter (130) und der Überlaufleitung (126) zum Ermöglichen des Aufsteigens von Wasser innerhalb des Syphonüberlaufsystems (128) erstreckt, umfaßt.

10. Gargerät nach Anspruch 9, **dadurch gekennzeichnet, daß**
die Wasseröffnung des Syphonüberlaufsystems (128) zwischen der Schulter (130) und der Trennwand (131), deren Unterkante unterhalb der Oberkante der Schulter (130) angeordnet ist, festgelegt ist.

11. Gargerät nach Anspruch 7, **dadurch gekennzeichnet, daß**
das Syphonüberlaufsystem (228) zwei miteinander verbundene Schenkel (232, 233) umfaßt, wobei der eine Schenkel (232) die Überlaufkante der Überlaufleitung (226) bildet, wobei die Überlaufkante den maximalen Wasserspiegel (M) im Wasserauffangbehälter (221) bei blockierter Ablaufleitung (223) bestimmt, und sich der andere Schenkel (233) in den Wasserauffangbehälter (221) hineinerstreckt, die Unterkante des Wasserauffangbehälters (221), jedoch nicht die Oberkante der Überlaufleitung (226) überragend.

12. Gargerät nach einem der vorangehenden Ansprüche, **dadurch gekennzeichnet, daß**
der Wasserauffangbehälter in Form eines Kondensators (121, 221) zwischen einem Garraum (140, 240) und der Sicherungsvorrichtung (128, 228) angeschlossen ist.

13. Gargerät nach einem der vorangehenden Ansprüche, **dadurch gekennzeichnet, daß**
die Wasservorlage (W) automatisch durch Wasser aus Ablösch-Düsen auffüllbar ist.

## Claims

1. A cooker comprising a safety device connected in a waste water system of the cooker, wherein the waste water system comprises a water collecting container with a supply main and a waste pipe, and the safety device (128, 228) provides a steam-tight seal via a water seal (W).

2. A cooker according to claim 1, **characterised in that** the waste water system comprises an overflow pipe (126, 226) through which water flows out only if the waste pipe (123, 223) is blocked, and the overflow pipe (126, 226) is closed by the water seal (W) in steam-tight manner against the water collecting container (121, 221).

3. A cooker according to claim 1 or 2, **characterised in that** the water seal (W) is filled with available waste water.

4. A cooker according to claim 1 or 2, **characterised in that** the water seal (W) is filled by a separate water supply device.

5. A cooker according to any of the preceding claims, **characterised in that** the safety device (128, 228) is so connected to the waste pipe (126, 226) that when the water in the safety device (128, 228) is above a certain level, water from the water seal (W) empties through the waste pipe (123, 223) as long as the said pipe is not blocked.

6. A cooker according to any of the preceding claims, **characterised by** a siphon for holding the water seal.

7. A cooker according to any of claims 2 to 5, **characterised by** a siphon overflow system (128, 228) containing the water seal (W).

8. A cooker according to claim 7, **characterised in that** the siphon overflow system (128) surround the overflow pipe (126), whose top edge projects into the water collecting container (121) and extends over the top edge of the waste pipe (123), [and] surrounds a water opening below the top edge of the overflow pipe (126) and above the top edge of the waste pipe (123), so that if the waste pipe (123) becomes blocked, water inside the siphon overflow system (128) can rise to the top edge of the overflow pipe (126) and flow out through it.

9. A cooker according to claim 8, **characterised in that** the siphon overflow system (128) comprises a shoulder (130) which defines the height of the water opening and thus serves to retain the water seal (W) in the siphon overflow system, and also comprises a partition (131) which extends between the shoulder (130) and the overflow pipe (126) in order to enable water to rise inside the siphon overflow system (128).

10. A cooker according to claim 9, **characterised in that** the water opening of the siphon overflow system (128) is defined between the shoulder (130) and the partition (131), the bottom edge of which is situated below the top edge of the shoulder (130).

11. A cooker according to claim 7, **characterised in that** the siphon overflow system (228) comprises two interconnected branches (232, 233), one branch (232) forming the overflow edge of the overflow pipe (226), wherein the overflow edge determines the maximum water level (M) in the water collecting container (221) when the waste pipe (223) is blocked, and the other branch (223) extends into the water collecting container (221) and projects beyond the bottom edge of the water collecting container (221) but not beyond the top edge of the overflow pipe (226).

12. A cooker according to any of the preceding claims, **characterised in that** the water collecting container in the form of a condenser (121, 221) is connected between a cooking chamber (140, 240) and the safety device (128, 228).

13. A cooker according to any of the preceding claims, **characterised in that** the water seal (W) is automatically fillable with water from quenching nozzles.

## Revendications

1. Appareil de cuisson avec un dispositif de sécurité incorporé à un système d'évacuation de l'eau de l'appareil de cuisson, où le système d'évacuation de l'eau comporte un récipient pour l'eau d'évacuation avec une conduite d'amenée et une conduite d'évacuation et où le dispositif de sécurité (128, 228) assure une étanchéité à la vapeur, grâce à un bouchon d'eau (W).

2. Appareil de cuisson selon la revendication 1, **caractérisé en ce que** le système d'évacuation de l'eau comprend une conduite de débordement (126, 226) par laquelle une évacuation de l'eau ne peut s'effectuer qu'en cas de blocage de la conduite d'évacuation (123, 223) et **en ce que** la conduite de débordement (126, 226) est isolée d'une manière étanche à la vapeur du récipient pour l'eau d'évacuation (121, 221), grâce au bouchon d'eau (W).

3. Appareil de cuisson selon la revendication 1 ou la revendication 2, **caractérisé en ce que** le bouchon d'eau (W) est complété au préalable avec de l'eau d'évacuation.

4. Appareil de cuisson selon la revendication 1 ou la revendication 2, **caractérisé en ce que** le bouchon d'eau (W) est complété par un dispositif séparé d'alimentation en eau.

5. Appareil de cuisson selon l'une des revendications précédentes, **caractérisé en ce que** le dispositif de sécurité (128, 228) est connecté avec la conduite d'évacuation (126, 226) de manière à évacuer l'eau du bouchon d'eau (W) lorsque son niveau dépasse une certaine limite supérieure dans le dispositif de sécurité (128, 228), par l'intermédiaire de la conduite d'évacuation (123, 223), pour autant que celle-ci ne soit pas bloquée.

6. Appareil de cuisson selon l'une des revendications précédentes, **caractérisé par** un siphon pour vider le bouchon d'eau.

7. Appareil de cuisson selon l'une des revendications 2 à 5, **caractérisé en ce que** le système d'évacuation par un siphon (128, 228) comprend le bouchon d'eau (W).

8. Appareil de cuisson selon la revendication 7, **caractérisé en ce que** le système d'évacuation par un siphon (128) entoure la conduite de débordement (126), dont le côté supérieur avance dans le récipient pour l'eau d'évacuation (121) et dépasse le côté supérieur de la conduite d'évacuation (123), **en ce qu'**il comporte une ouverture pour l'eau en dessous du côté supérieur de la conduite de débordement (126) et audessus du côté supérieur de la conduite d'évacuation (123) pour que l'eau, lorsque la conduite d'évacuation (123) est bloquée, monte dans le système d'évacuation par un siphon (128) jusqu'au côté supérieur de la conduite de débordement (126) pour être évacuée par cette conduite.

9. Appareil de cuisson selon la revendication 8, **caractérisé en ce que** le système d'évacuation par un siphon (128) comprend un épaulement 130 qui détermine la hauteur de l'ouverture pour l'eau et qui sert ainsi à retenir le bouchon d'eau (W) dans le système d'évacuation par un siphon (128) et une paroi de séparation (131) qui s'étend entre l'épaulement (130) et la conduite de débordement (126) pour permettre à l'eau de monter dans le système d'évacuation par un siphon (128).

10. Appareil de cuisson selon la revendication 9, **caractérisé en ce que** l'ouverture pour l'eau du système d'évacuation par un siphon (128) se trouve entre l'épaulement (130) et la paroi de séparation (131), dont le côté inférieur se trouve sous le côté supérieur de l'épaulement (130).

11. Appareil de cuisson selon la revendication 7, **caractérisé en ce que** le système d'évacuation par un siphon (228) a deux côtés (232, 233) solidaires l'un de l'autre, où un (232) des côtés constitue le côté d'évacuation de la conduite de débordement (226), ce côté d'évacuation déterminant le niveau maximum d'eau (M) possible dans le récipient pour l'eau d'évacuation (221) en cas de blocage de la conduite d'évacuation (223) et l'autre (233) des côtés s'étend à l'intérieur du récipient pour l'eau d'évacuation (221), le côté inférieur du récipient pour l'eau d'évacuation (221) ne dépassant toutefois pas le côté supérieur de la conduite de débordement (226).

12. Appareil de cuisson selon l'une des revendications précédentes, **caractérisé en ce que** le récipient pour l'eau d'évacuation est réalisé sous la forme d'un condenseur (121, 221) entre une chambre de cuisson (140, 240) et le dispositif de sécurité (128, 228).

13. Appareil de cuisson selon l'une des revendications précédentes, **caractérisé en ce que** le bouchon d'eau (W) peut être complété automatiquement avec de l'eau par une buse de remplissage.
